# EUROPEAN PATENT SPECIFICATION

(11) **EP 2 752 359 B1**
(45) Date of publication and mention of the grant of the patent: **11.11.2020**
(21) Application number: 12819506.2
(22) Date of filing: 02.08.2012
(51) Int. Cl.: B62H 5/00

(54) **BASE FOR LOCKING ELEMENTS**
BASIS FÜR VERSCHLUSSELEMENTE
SUPPORT POUR ÉLÉMENTS DE FERMETURE

(30) Priority: 02.08.2011 ES 201131347; 21.10.2011 ES 201131690; 19.03.2012 ES 201230410
(43) Date of publication of application: 09.07.2014
(73) Proprietor: Gavaldá Martí, María Cecilia, 08970 Sant Joan Despí (ES)
(72) Inventor: SARMIENTO GAVALDÁ, Josep, E-08970 Sant Joan Despí (ES)
(74) Representative: Ponti & Partners, S.L.P
(86) International application number: PCT/ES2012/070602
(87) International publication number: WO 2013/017727

(56) References cited:
- EP-A1- 0 492 742
- EP-A2- 2 168 853
- DE-C1- 4 103 295
- DE-C1- 4 103 295
- FR-A1- 2 765 852
- JP-A- 2002 127 968
- US-A- 4 436 232
- US-A- 5 538 167
- US-A- 5 551 609
- US-A- 5 836 491

## Description

### Object of the Invention.

More specifically the invention relates to a support immobilised by any known means to the structure of a vehicle with two or more wheels, such as a bicycle, motorcycle, quad or the like; the device is intended to prevent the theft of said vehicle or of parts of the same. The device is intended to hold one or more locking elements such as a lock or the like, such that when the vehicle is parked, said locking means are applied to the various parts of the vehicle in order to prevent the parts from being removed, while said means remain immobilised on the support when said vehicle is in use and do not interfere with the user.

### State of the Art.

On the market there are different types of locks that can be considered as state of the art, such as chains, padlocks, cables, the aim of which is to avoid certain parts of a vehicle (with two or more wheels) being stolen when not in use and parked in the street, a car park or the like.

Although the use of these devices is normally quite effective, their storage when not in use is not so convenient, so that the user needs a part of the vehicle to hang these locking elements when not in use, with the resulting noise, vibrations, and impact on the elements of the vehicle where they rest, causing dents, abrasion of paintwork and general damage.

The current state of the art does not contemplate supporting elements such as those presented in this invention, which can store and save the locking elements, when not in use.

It is common to see vehicles of two or more wheels, which when parked in the street are systematically subject to theft, losing their seat, one or more wheels or sometimes even the handlebar. This is currently prevented by the use of one or more locking devices, which may be of identical or different nature, but without a way to store these locking devices when not in use. The document JP2002127968 A discloses a support for locking elements for vehicles with two wheels according to the preamble of claim 1.

### Scope of the Invention.

The present invention relates to a support for locking elements for vehicles of two or more wheels, as recited in claim 1. Further embodiments are defined in the remaining dependent claims.

On the chassis or body of the vehicle, and avoiding it being stolen.

In another embodiment the support for locking elements for vehicles of two or more wheels also offers an automated embodiment, so that when the "U" members are stored in the device, a support for the lock of the padlock emerges automatically, and when the lock is removed, this support is automatically concealed.

On the other hand, the support for locking elements for vehicles of two or more wheels also introduces means to alert the user that one or both wheels of the vehicle are immobilised by a padlock, avoiding something that happens in other locking devices when the user starts the vehicle without removing the padlock and thus causes damage to the vehicle.

### Description of the invention.

It is a support made of any type of material, from a wire to a plastic body, obtained by plastic injection moulding, which is installed onto the chassis or body of the vehicle with two or more wheels, by any known means, being adaptable (without changing its main features) to a tray, frame, chassis or similar, either from its top or bottom.

This support has an irregular perimeter formed by concave and convex elements, or flat concave surfaces, on the lower side of a carrier tray, in front of each other, in such a manner that the "U" members of a conventional padlock can be housed in said concave surfaces, the convex or flat surfaces being used as means for separation, or of separation distance between the concave surfaces of said "U" members, so that they are immobilised when the vehicle is moving, and placed horizontally or vertically in said tray, and, in one of the possible embodiments of the support, with the locking sockets of the "U" members secured to a plate with lugs onto which these sockets lock, when the locking device is not in use.

In one of the possible embodiments, the support is formed by two or more bodies with concave-convex surfaces, located on the right and left of the tray, and as an annexe of one of the bodies, the plate which stops the "U" members of the locking device becoming detached from the support and holds the locking sockets when not used for locking.

The locking device may be a padlock, which has a "U" members the ends of which are immobilised in a locking socket by turning a key.

Additionally, if desired, the support can incorporate open or closed tubular elements to protect the "U" members from water and the weather in general, these tubular elements having elastic means on one of their ends to avoid longitudinal movement of the "U" members together with a projection from said tubular body, when not in use, and are subject to the vibrations of the vehicle when driving over irregular road surfaces.

In another of the possible embodiments, the support is formed by a prismatic body, the smaller side bases of which have grooves for the placement and immobilisation of the corresponding "U" members, and in one of the front bases there are pivots to immobilise the sockets. On one of the larger bases of the upper support there are clamps for securing the support to the carrier tray and to any of the crossbeam or crossmember rods that form it, either by its lower or upper part.

Additionally and as an improvement of the invention, there is the automation of the device in the main patent, which has been indicated to fit the parts of a padlock, formed by a lock in the which a "U" members made of steel or similar material is fitted and immobilised, when the vehicle is moving, and is released when the vehicle is stationary and you wish to immobilise it with said padlock.

The improved device comprises two separate coplanar tubes joined by one or more plates, with other tubes joined to these tubes that have a groove along which the support of the padlock lock slides.

The automation of the device is achieved by means of elements which enable when the vehicle is in movement, and the "U" members of the padlock are inserted into the upper tubes, this insertion generates the outward movement of a support for the immobilisation of the lock of the padlock, in the lower tubes joined by any means to the upper tubes.

The upper tubes are placed longitudinally and are joined with a plate that has the corresponding holes, which have been designed for the attachment of the device to a vehicle with two or more wheels, and inside which there are springs the ends of which are secured to the tubes by means of a plug.

The lower tubes are fitted in the in lower part of the upper tubes, and their side surface has a non-through elliptical groove, designed to hold the support for the lock of a padlock.

The support for the padlock has a plate, from the ends of which emerge perpendicularly lugs with grooves to facilitate immobilisation of the lock of the padlock.

To enable the movement of the padlock "U" members and the support, the improved device incorporates a kinematic chain, formed by the union of levers which convert a movement of the of the padlock "U" members from left to right, in a reverse movement of the lock of the padlock.

The invention is complemented with a contact breaker, contact sensor plate or similar device which combined with the support enables a luminous or acoustic warning to be switched on or off, warning the user if the padlock is locked, or there can be a electrical cut-off connection to stop the engine of the vehicle from starting.

The support described in the improvements is formed by a body or perforated iron plate to reduce its weight, in one of the faces of which there have been welded some tubular elements on the right and left of the body of the support, the first two holding some rods one of the ends of which are finished with lugs, and the second with cavities for inserting the "U" members of the padlock when not in use. Joined to one of the tubular elements there is a contact breaker, a sensor, a metallic plate or similar device with a rod that receives the pressure of the end of the lugs when the rods are released from the lock of the padlock.

The rods-lugs are in turn joined by a brace perpendicular to them, which may be pushed forwards and backward thanks to a bent plate which the user presses to make the lugs come out of the tubular element and so immobilise their end to the box lock of the padlock.

In turn the end part of these rods-lugs presses against the rod of the contact breaker informing the user by means of the aforementioned illuminated or acoustic warning that the wheels are immobilised and should be freed.

Additionally, these rods can incorporate extensions by which, due to their annular configuration, allows the passage of the "U" members of a conventional padlock, to lock the vehicle user's helmet.

Other details and characteristics shall be shown throughout the description below referring to drawings attached to this report which are shown for illustrative but not limiting purposes only in a drawing of the invention.

### Description of the drawings.

Figure 1 is a side elevation view of a conventional carrier (10), for vehicles with two or more wheels, onto which a support (33) has been attached formed by one or more bodies in the shape of concave (23a) and convex (23b) surfaces, the surface can be flat (23b) instead of convex, these surfaces (23) being joined by tubular bodies (24) in one of the possible embodiments.
Figure 2 is a top plan view of a carrier (10), in which the support (23) has been located in vertical position instead of horizontal, on the carrier (10).
Figure 3 is a perspective of the "U" members (17) in which the horizontal part (17^{a}) is angled.
Figure 4 is a perspective of a support (23) with tubular bodies (24) for the protection of the "U" members (17), which are located by the vertical part (17b) inside (24).
Figure 5 is a front elevation view of the plate (18), with one or more projecting pivots (19).
Figure 6 is a side elevation view of a plate (18), with one or more projecting pivots (19).
In Figure 7, (a) is a perspective of a "U" member (17) of a locking device, for instance a padlock, with the aforementioned "U" member (17) and a locking socket (20), showing (17) and (20) of Figure 1.
Figure 8 is a front elevation view of a support (23) attached to the tray (10) and the rods (11) of the support; in one of the possible embodiments the body of which are concave surfaces (23a) joined to each other by flat surfaces (23b), which may be (23b) alternatively convex surfaces, the role of which is to leave high areas between the "U" members (17) when they are resting in the support (23) object of the invention.
Figure 9 is a front elevation view of a safety screw (38) for immobilising the support (23), and the carrier tray (10) to any point of a vehicle with two or more wheels.
Figure 10 is a perspective of the safety screw (38), shown in the Figure 9.
Figure 11 is a top plan view of a support (33) with slots (34) in its smaller side bases (36) for the placement of the "U" members (17).
Figure 12 is a front elevation view of the support (33) shown in the previous figure.

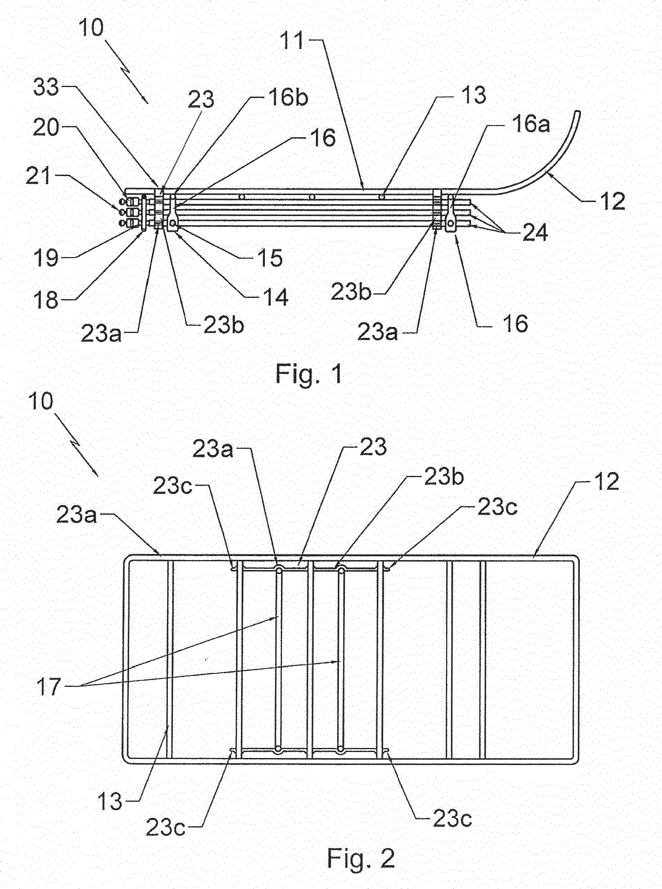

Figure 1 is a top plan view of the device (10), which comprises tubes (11), and in the lower part of (11) tubes (18) and a support (29) for the lock of a padlock.
Figure 2 is a side elevation view of the device (10), and with a support (29) in the mouth (22) of the tubes (18).

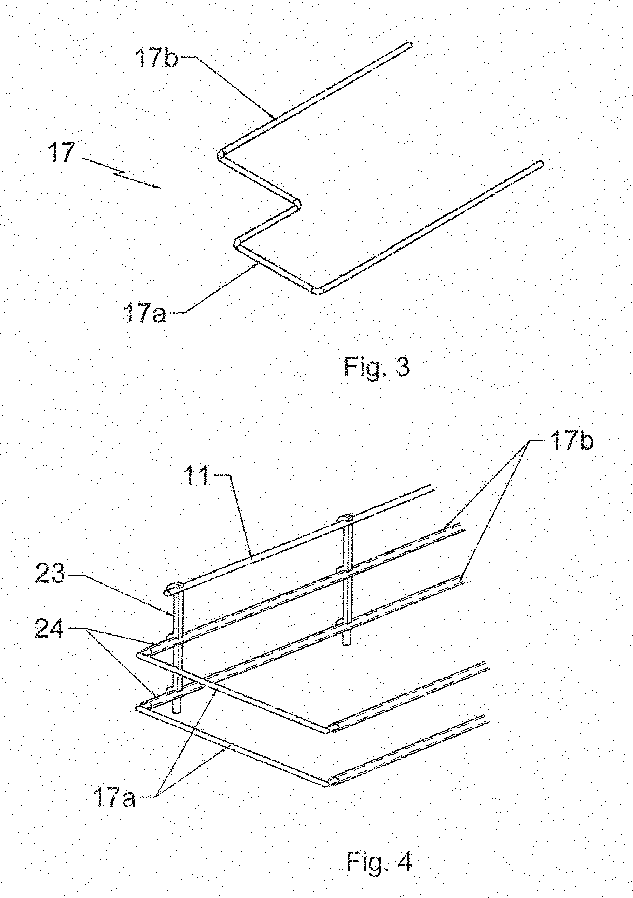

Figure 3 is a top plan view of the support (29).
Figure 4 is a side elevation view of the device (10) when the "U" member (33) of the padlock is directed inside the tube (11).

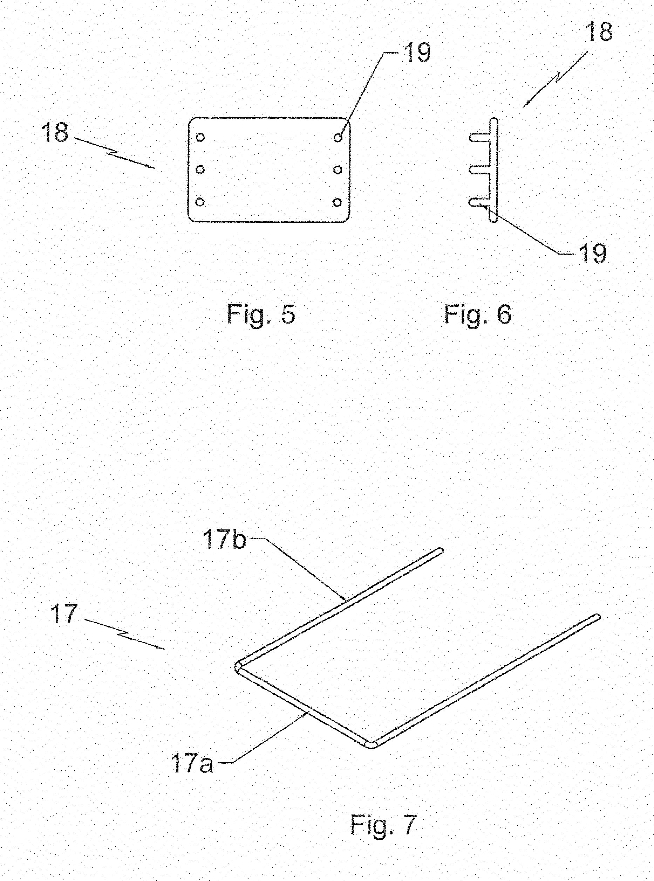

Figure 5 is a side elevation view of the device (10) when the "U" member (33) of the padlock is inside the tube (11) pushing the plunger (19) and moving the kinematic chain (31).
Figure 6 is a perspective of the device (10) with the support (29) out of its natural housing, the tubes (12).
Figure 7 is a perspective of the device (10) with the support (29) partially inside the tubes (12), the lugs (23) coming out of the mouth (22).

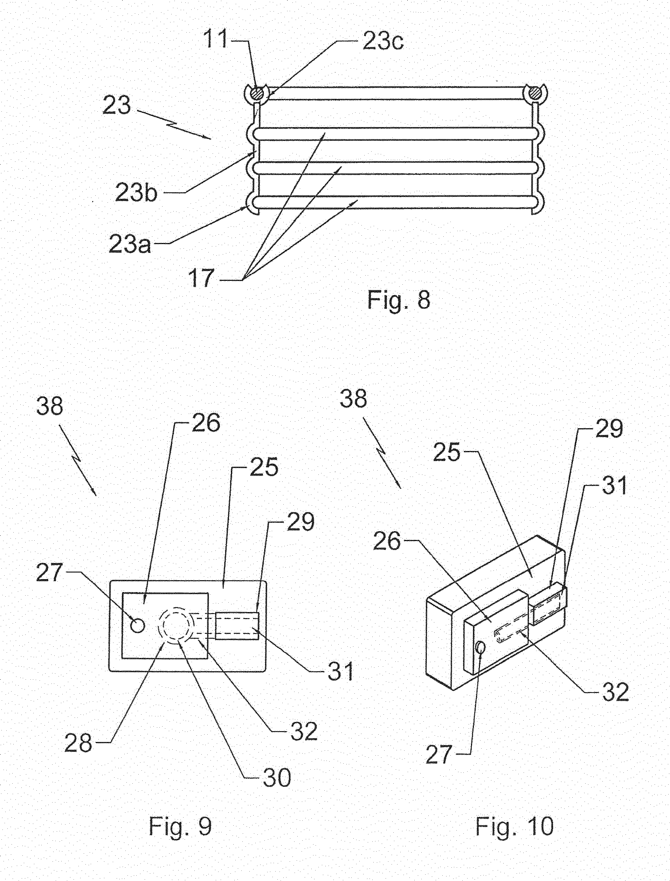

Figure 8 is a perspective of the device (10) with the support (29) totally inside the tubes (18).
Figure 1 is a lower plan view of the support (10) in the base of which are the tubular elements (13) and (14), and the plate (17) perpendicular to the brace (16) and this to the rods-lugs (15).
Figure 2 is a side elevation view of the support (10) of the body (11).
Figure 3 is a front elevation view of the support (10).
Figure 4 is a section through A-A', according to Figure 1.
Figure 5 is a lower plan view of the support (10) when the lock box (24) is in the ends of the lugs (15).
Figure 6 is a side elevation view of the support (10) when it incorporates in the ends of the lugs (15) the lock box (24) of a conventional padlock.

Below is a list of the different parts of the invention, which are indicated in the above drawings with their respective numbers; (10) carrier tray, (11) crossbeam rod, (12) end stop, (13) crossmember rod, (14) flattened area, (15) orifice, (16) vertical part, (17) "U" member, (17 a) base of (17), (17b) vertical parts of "U" member (17), (18) plate, (19) pivots, (20) socket, (21) key, (22) elastic means, (23) support, (23a) concave surface, (24) tubular passageways, (25) plate, (26) cover, (27) bolt, (28) orifice, (29) angled area, (30) screw, (31) rod, (32) non-through hole, (33) support, (34) grooves, (35) lugs, (36) front base of the support (33), (37) clamps, (38) safety screw.

(10) device, (11) tubes, (12) crossmember plate, (13) holes, (14) spring, (15) plug, (16) end of (11), (17) mouth, (18) tubes, (19) plunger, (20) spring, (21) end of tubes (18), (22) mouth of (18), (23) lugs, (24) angled area, (25) plate, (26) annular recess, (27) pivot, (28) elliptical groove, (29) lock support, (30) levers, (31) kinematic chain, (32) lock of the padlock, (33) "U" member of the padlock.

(10) support, (11) body, (12) holes, (13-14) tubular elements, (15) rods-lugs, (16) brace, (17) plate, (18) spring, (19) tab, (20) flange, (21) grooves, (22) contact breaker, (23) rod, (24) lock box, (25) lower face of (11), (26) tubular extensions, (27) holes.

### Description of an embodiment of the invention.

One of the preferred embodiments of the invention, as shown in Figure 1, a totally conventional carrier tray (10), comprising generally some crossbeam rods (11), reinforced with crossmember rods (12) also parallel to each other, which is attached (10) to a two-wheeled vehicle, for instance a bicycle, by means of rods (16), which, in one of the embodiments, comprise a horizontal part (16 b), and a vertical part (16a), with a flattened area (14) having (14) an orifice (15), which by means of the corresponding nuts and bolts (not shown in the figures) the carrier tray (10) is secured to the bicycle (or similar vehicle) frame.

The tray (10) is attached to a vehicle of two or more wheels by means of conventional screws (not shown in the figures), so that it allows the fitting of a support (23), as shown in Figure 1, which can be made of any material, and has a body formed by the union of concave surfaces (23a) and flat surfaces (23b), or convex surfaces instead of these flat surfaces (23b), as a means of separating one or more "U" members (17) as shown in Figure 1, these "U" members (17) being part of a locking device such as a padlock comprising this "U" member (17) and a locking socket (20), with its corresponding key (21), when turning it, the vertical parts are immobilised (17b) in the socket (20).

As shown in Figure 1, the bodies of the support (23) are hung vertically and immobilise the tray (10) and the crossmember rods (13) by its upper part (23a) or the like, there may be two or more bodies (23) under or over the tray (10) in front of each other to right and left of the same, both in vertical position in which the "U" members (17) will be in standby situation of in horizontal position, resting on the concave surfaces (23a) as shown in Figure 1, or resting on the tubular passageways (24).

The support bodies (23) can also be hung horizontally from the carrier tray (10), see Figure 2, so that in this second horizontal position of the bodies of the support (23), the "U" members (17) would span the wheel of the vehicle between its vertical parts (17b), to which the tray (10) and the support (23) are fitted.

In another of the possible embodiments, the bodies (23) can be joined by means of open tubular passageways (24) as shown in Figures 1 and 4, which protect the "U" members (17), so that each vertical part (17b) of the "U" member (17) is in horizontal resting position inside said tubular passageways (24) of the body of the support (23), see Figure 1, or, in another version, in vertical position, as shown in Figure 2.

Turning with regard to the tray (10) there is a plate (18), see Figures 5 and 6, with pivots (19) in which there are locking sockets (20), as shown in Figure 1, stopping the "U" members (17) coming out of the bodies (23), or the tubular passageways (24), when not in use.

To avoid damage to the tray (10) and the support (23), the tray (10) is attached to any point of the vehicle by means of a safety screw (38), which, as shown in Figures 8 and 9, comprises on a small metal plate (25), and joined to (25) a cover (26) which may turn with regard to the plate (25) thanks to a bolt or rivet (27), which covers the hole (28), through which a screw (30) passes, which secures the safety screw (38) to the tray (10) and to any point of the vehicle, preferably its frame or chassis, when the rod (31) passes through the angled area and fits by deformation into the cover (26), one end of said rod (31) being housed in the non-through hole (32).

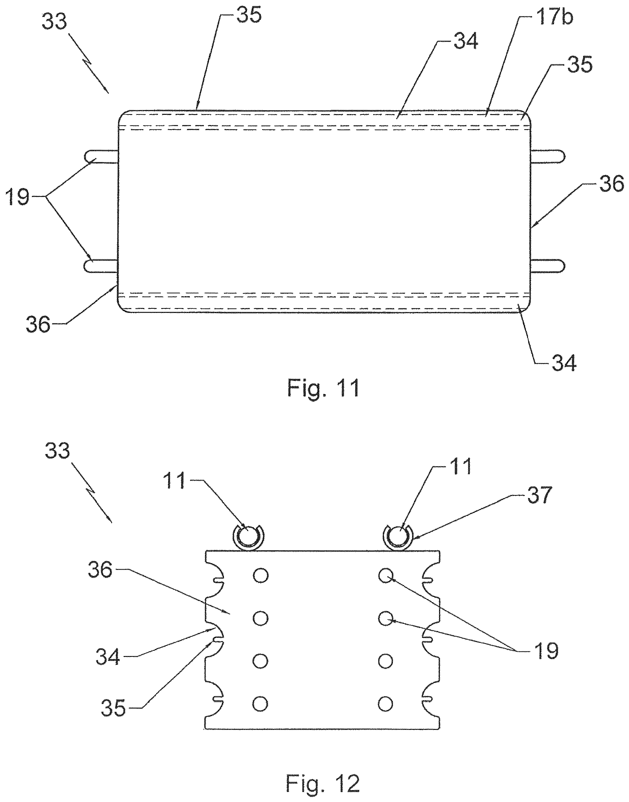

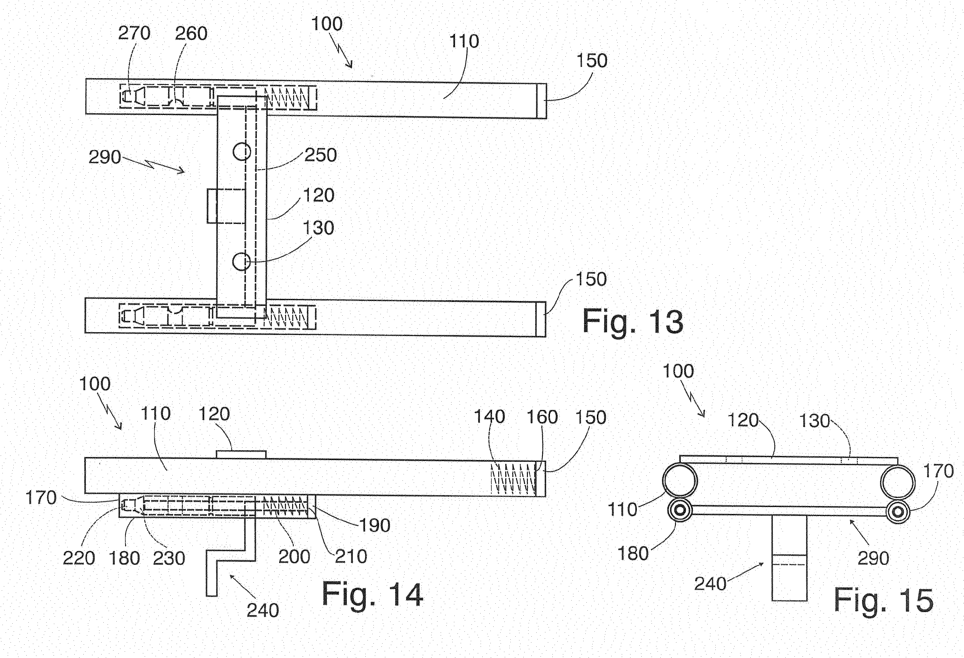

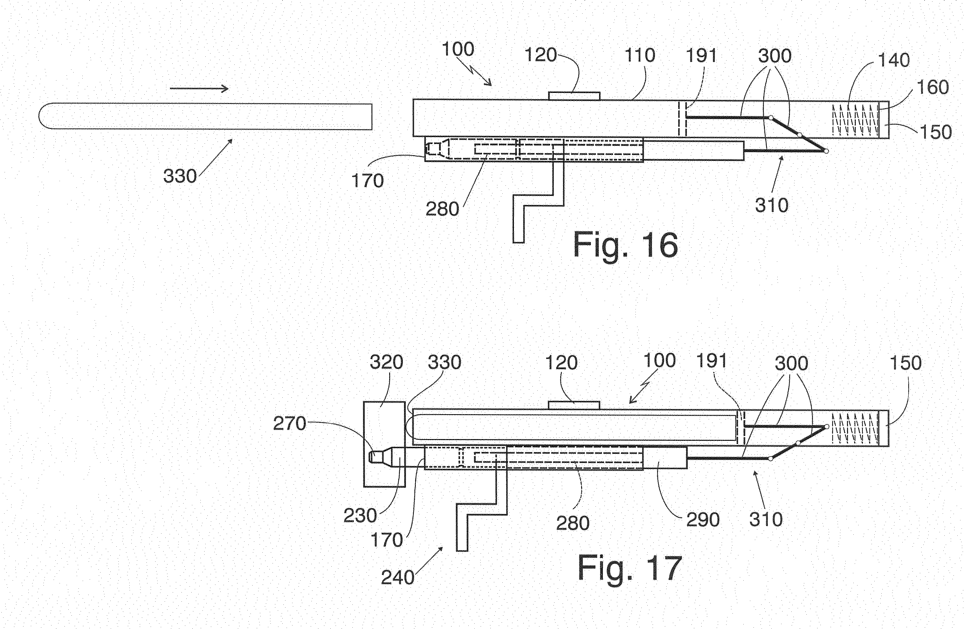

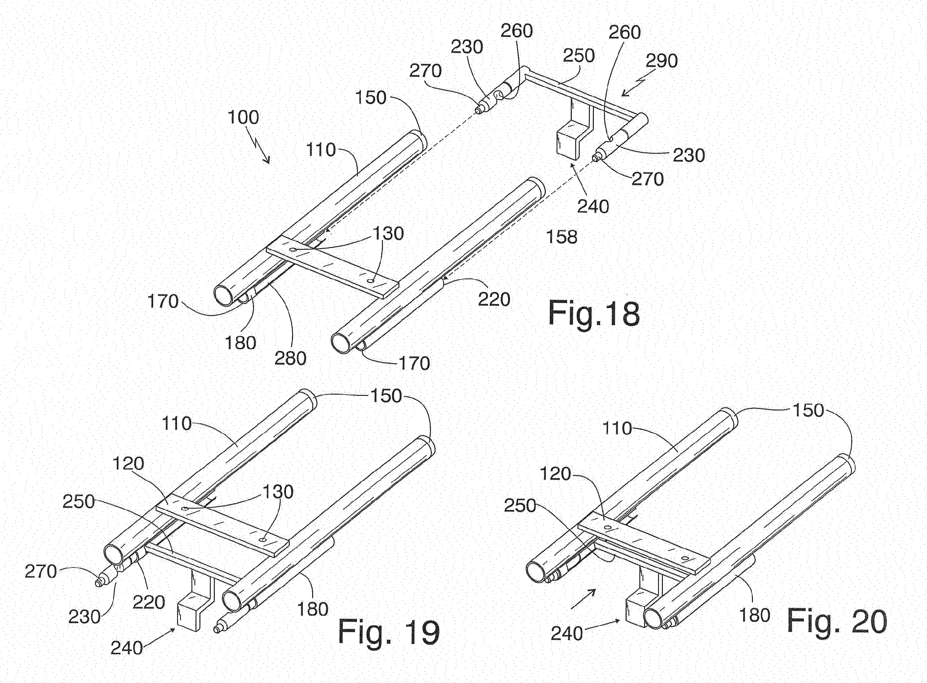

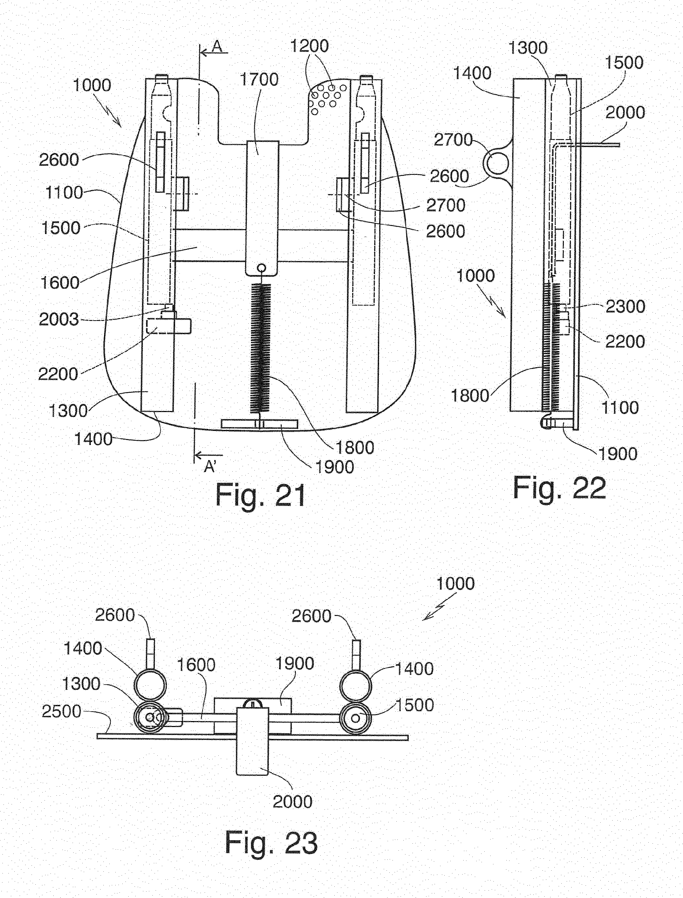

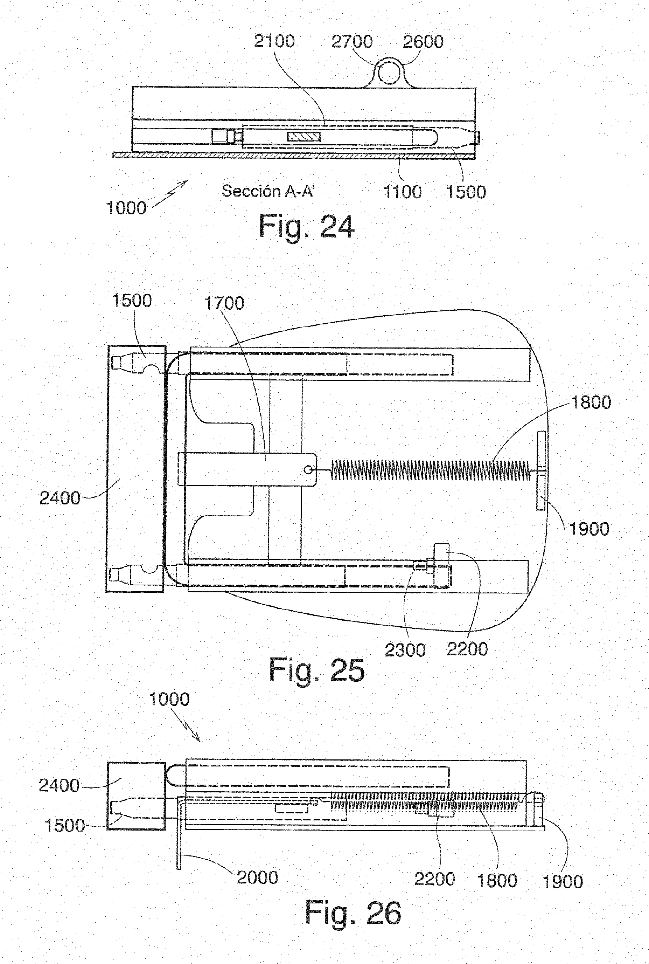

In other of the possible embodiments, the safety support for the locking device (33) has a configuration as shown in Figures 11 and 12, namely a prismatic body in the lower sides (36) of which have the concave-convex surfaces of Figure 8, or flat-concave surfaces, which are no other than these concave surfaces in the form of longitudinal grooves (34) that hold the "U" members (17), their vertical parts (17b) being in the same, secured by means of lugs (35), which avoid it moving in this support (33) once fitted to the grooves (34), having on the front base one or more pivots (19), for immobilising the sockets (20).

The operation of the invention's safety support begins with the placement of the support (23) or (33) on the carrier tray (10), securing it by means of open clamps (37), in the crossbeam or crossmember rods (11-13) of said tray (10), and then place the "U" members (17) in the concave surfaces (23a), or in the tubular passageways (24) or longitudinal grooves (34), securing the "U" members (17) by means of lugs or ribs (35), which avoid the undesired exit of (17), the sockets (20) placed in the pivots (19) on the plate (18), or on the front base (36).

When the user wishes to immobilise the vehicle of two or more wheels (not shown in the figures), they remove the sockets (20) from the pivots (19), turning the locking keys (21), remove the "U" members from the aforementioned convex surfaces (23a), or from the tubular passageways (24) or grooves (34) and place the "U" members (17) on the wheel, immobilising it to the frame of the vehicle, the seat to the frame, or the frame of the vehicle to an immobile object in the street.

In other of the preferred embodiments of the invention and as shown in Figure 1, improvements are materialised in a device (10) comprising parallel tubes (11), joined by one or more crossmember plates (12), the inside of the tubes (11) having some elastic means such as a spring (14) in the lower part of the tubes (11), other tubes (18) joined to the first (11) by any known method such as welding, bolting or the like.

The tubes (18) have on one of their ends a mouth (17), by which a support (29) for the lock of a padlock is inserted, of a "U"-shape in the ends of which the lock (32) is immobilised.

As shown in Figure 2, the support (29) has some lugs (23) jointed by a perpendicular plate (25), from in its lower part emerges a doubly angled area (24), said support (29) being inserted in the tubes (18) by one of its mouths (22) thanks to an elliptical groove (28), with some plugs (19) in one of the ends of these tubes (18), and other plugs (15) in the ends (16) of the tubes (11).

The lugs (23) have annular recesses (26) on their side surface, as shown in Figures 2 and 3.

When the user of a vehicle of two or more wheels is driving, the "U" member (33) of the padlock separated from the lock (32), this "U" member (33) is housed in the tubes (11), fitting into them and the "U" member (33) entering by the mouths (17) of (11) pressing against springs (14), these springs (14) being immobilised by the plug (15), at the same time as the movement of the "U" member (33) inside the tubes (11) forces by suitable means to the kinematic chain (31) to the movement of the support (29) outside of the tubes (18), only the lugs (23) projecting through the mouths (22) of (18), on which the lock (32) of the padlock is immobilised on the annular recess (30), as shown in Figure 5.

The movement of the support (29) inside the tubes (18) is achieved by means of elliptical grooves (28) and against the action of the springs (20) inside the tubes (18), these springs being immobilised (20) at one end by plugs (19) in the end (21) of (18), so that when the "U" member (33) of the padlock enters the tubes (11), the lugs (23) of the support (29) project, and vice versa when the lock (32) of the padlock is removed from these lugs (23), the "U" member of the padlock projects form the mouths (17) of the device (10), the lugs (23) moving inside the tubes (18), see Figure 8.

The kinematic chain (31) has a plunger (19) linked to some levers (30) so that when the "U" member (33) is inserted in the tube (11), the end of (33) pushes the plunger (19) and the levers (30) push the support (29) which goes through the plug (19) compressing the springs (20) and the lugs (23) projecting and the user places the lock (32) in the pivots (27) and annular recess (26). When the lock (33) is removed, the kinematic chain (31) allows pressure of the springs (20) to push the "U" member (33) towards the outside of the tubes (11).

In other of the preferred embodiments of the invention and as shown in Figures 1 and 5, the support (10) comprises a plate as a body (11) with some holes (12) in its surface, in the lower face (25) of the body (11) there are attached some tubular elements (13-14), as shown in Figures 3, so that on the inside of the tubular elements (13) there are some rods with lugs (15), in one of their ends, these rods are joined by a brace (16), as the tubular elements (13) have a groove (21).

The movement of the rods-lugs (15) is done by the user when pressing or pulling a plate (17) using a flange (20), perpendicular (17) to the brace (16) and joined to the end of the plate (17) to a tab (19) by means of a spring (18).

The operation of the support (10) is as follows: When the user (see Figure 5) releases the rods and lugs (15) from the lock box (24), they move back pushed by the spring (18) and press the rod (23) of the contact breaker (22), then the user removes the "U" member of the padlock from the tubular elements (14), and then blocks the wheels of the vehicle with the "U" member and locks in turn the ends of the "U" member with the lock box (24).

When the user wishes to start the vehicle and turns on the ignition, an electrical cut off or a warning light or acoustic warning will inform the user that it is not possible to start without removing the padlock, separating the "U" member from the lock box (24) of the padlock and placing the "U" member in the tubular elements (14), and then locking them and closing the lock box (24) on the rods and the lugs (15), the lock box (24) stopping the exit of the "U" member from the tubular elements (14).

The support (10) is designed so it can be attached to the top case of a vehicle of two or more wheels such as a motorcycle or a quad, without causing any inconvenience for fitting the case or other elements onto the vehicle.

Alternatively the support (10) may incorporate some extensions (26) (as shown in Figure 3) in the tubular elements (13-14) with holes (27), whose purpose is so that the user can secure a helmet by means of a conventional padlock, the "U" member of which pass through the opening of the helmet and the holes (27) are protected form undesired effects. Another option is to place the extensions (26) in the rods-lugs (15) so that they are parallel.

Having sufficiently described this invention using the figures attached, it is easy to understand that any modification may be made to the detail which may be deemed to be appropriate, whenever these changes do not alter the essence of the invention summarised in the following claims.

## Claims

1. Support for locking elements for vehicles of two or more wheels, which can be installed onto the chassis or body of the vehicle, wherein the locking elements are formed by a padlock with a locking member with an "U" shape and a locking socket with a key, wherein the support comprises:
- one or more bodies (23) attached to a carrier tray (10), in which at least one locking member with "U" shape (17, 330) are secured, resting the at least one locking member with an "U" shape (17, 330) on one or more bodies (23) or when the locking member with an "U" shape (17) are attached to these bodies (23) by their ends and housed in tubular passageways (24), the bodies (23) are placed on the right and left of the carrier tray (10), wherein one or more bodies (23) are joined by the tubular passageways (24) into which the locking member with an "U" shaped (17, 330) are inserted, the tubular passageways (24) have springs on their ends, and
- a plate (18) with projecting pivots (19), in which the locking member with an "U" shape (17, 330) comprises locking sockets (20) provided with keys (21) and are therein immobilised, the support is immobilised with the carrier tray (10) to the chassis or frame of the vehicle with a safety screw (38), wherein the support (100) has upper longitudinal parallel tubes (110) jointed by means of the corresponding plate (120) by its upper part, in the which there are holes, and jointed to the lower part of these tubes, other affected tubes (180) with slide grooves on part of their sides, these lower tubes containing a lever support (290) for immobilising the lock of a padlock, the upper and lower tubes comprising means for immobilising the "U" members (170) of the padlock and the support for the lock of the same respectively, and means for the movement of the "U" members (170) of the padlock and the lever support (290) of the lock in the same direction and opposite direction **characterised in that**
the support (100) include a kinematic chain (310) comprising a plunger (191) linked to some levers (300), said kinematic chain (310) adapted to when the locking member with an "U" shape (330) is inserted in the tube (110), the end of the locking member with "U" shape (17, 330) pushes the plunger (191) and the levers (300) push a lever support (290) which goes through a groove (280) compressing the springs (200) and the lugs (230) projecting and the user places the lock (320) in the pivots (270) and annular recess (260), and when the lock (320) is removed, the kinematic chain (310) allows pressure of the springs (200) to push the "U" member (330) towards the outside of the tubes (110).

2. Support for locking elements according to the claim 1, wherein the body (23) of the support comprises some concave surfaces (23a) joined by flat surfaces (23b).

3. Support for locking elements according to the preceding claim, wherein the surfaces (23b) of the body (23) will be convex.

4. Support for locking elements according to the claim 1, wherein the concave-convex, or flat concave surfaces (23) are attached to the carrier tray (10) by means of their concave surfaces or by clamps.

5. Support for locking elements according to the claim 1, wherein the support comprises a body (33) with a prismatic configuration, the side smaller bases (36) with longitudinal grooves (34), and near one of the ends of these grooves (34) there are some ribs (35) to immobilise the locking members (17) with "U" shape, and one or more pivots (19) on the front base (36).

6. Support for locking elements according to the claim 1, wherein the safety screw (38) comprises a cover (26) on a small metal plate (25), which may turn the cover (26) with regard to the plate (25) thanks to a bolt or rivet (27) jointing them, said cover (26) being concealing the hole (28), through which a screw (30) passes, which secures the safety screw (38) to the tray (10) and to any point of the vehicle, when the rod (31) passes through the angled area and fits by deformation into the cover (26), one end of said rod (31) being housed in the non-through hole (32).

7. Support for locking elements according to claim 1, wherein the support comprising:
- upper longitudinal parallel tubes (110), joined by one or more crossmember plates (120), the inside of the tubes (110) having spring (140),
- in the lower part of the tubes (110), other tubes (180) are joined to the first tubes (110), the tubes (180) have on one of their ends a mouth (170), by which a support (290) for the immobilization of lock socket of a padlock is inserted, the support (290) having lugs (230) jointed by a perpendicular plate (250), from in its lower part emerges a doubly angled area (240), said support (290) being inserted in the tubes (180) by its mouths (220) thanks to an elliptical groove (280), and
- some plugs (190) and (150) are provided in one of the ends of tubes (180), and in the ends (160) of the tubes (110).

8. Support for locking elements according to claim 7, wherein the lugs (230) of the support for the lock of the padlock have annular recesses (260) on their side surface.

9. Support for locking elements according to the preceding claim 7, wherein the means for immobilising the member of the padlock with "U" shape comprise some springs (140), one end of which is immobilised by a plug (150) in one of the ends of the upper tubes (110).

10. Support for locking elements according to the claim 7, wherein the means for immobilising the locking member of the padlock and its support are some springs (200), the end of which are immobilised by a plug (190) in one of the ends of the lower tubes (180).

11. Support for locking elements according to the claims 1 and 7, wherein the plunger are adapted to slides to the right and left of the upper tubes.

12. Support for locking elements according to the claim 1 wherein the support (1000) comprises:
- a plate as a body (1100) with some holes (1200) in its surface,
- in the lower face (2500) of the body (1100) there are attached the tubular elements (1300-1400), wherein inside of the tubular elements (1300) there are some rods with lugs (1500) in one of their ends, said rods are joined by a brace (1600), and are adapted to run by the groove (2100) of the tubular elements (1300),
- a plate (1700) perpendicular bound to the brace (1600) has a flange (2000), said plate (1700) joined by its end to a tab (1900) by means of a spring (1800).

13. Support for locking elements according to the claim 12 wherein the rod with the lugs (1500) is immobilised with the lock member with a "U" shape of the padlock in the tubular elements (1300-1400), with the help of the lock box (2400) which locks on these lugs (1500).

14. Support for locking elements according to the claim 12, wherein the rods and lugs (1500) is adapted to moving by the action of the user on the flange (2000) pulling the rods-lugs (1500) against the force of the spring (1800).

15. Support for locking elements according to the claim 12, **characterised in that** the support for locking elements (1000) has some means for warning the user, such as a contact breaker sensor (2200) or the like and its rod (2300) attached to the body (1100) of said support (1000), and some tubular elements (1300-1400) in the upper or lower part of the body (1100) of the support (1000).

## Patentansprüche

1. Träger für Verriegelungselemente für Fahrzeuge mit zwei oder mehr Rädern, der auf dem Fahrgestell oder dem Körper des Fahrzeugs installiert werden kann, wobei die Verriegelungselemente durch ein Vorhängeschloss mit einem Verriegelungsorgan mit einer "U"-Form und einem Verriegelungseinsatz mit einem Schlüssel gebildet sind, wobei der Träger umfasst:
- einen oder mehrere Körper (23), die an einem Trägereinsatz (10) befestigt sind, in dem mindestens ein Verriegelungsorgan mit "U"-Form (17, 330) gesichert ist, wobei das mindestens eine Verriegelungsorgan mit einer "U"-Form (17, 330) auf einem oder mehreren Körpern (23) liegt, wenn die Verriegelungsorgane in "U"-Form (17) an ihren Enden an diesen Körpern (23) befestigt sind und in röhrenförmigen Durchgängen (24) aufgenommen sind, wobei die Körper (23) auf der rechten und der linken Seite des Trägereinsatzes (10) positioniert sind, wobei ein oder mehrere Körper (23) durch die röhrenförmigen Durchgänge (24), in die die Verriegelungsorgane in "U"-Form (17, 330) eingeführt werden, verbunden sind, wobei die röhrenförmigen Durchgänge (24) an ihren Enden Federn aufweisen, und
- eine Platte (18) mit vorstehenden Drehzapfen (19), in der das Verriegelungsorgan in "U"-Form (17, 330) Verriegelungseinsätze (20), die mit Schlüsseln (21) versehen sind, umfasst und worin sie fixiert werden, wobei der Träger mit dem Trägereinsatz (10) an dem Fahrgestell oder Rahmen des Fahrzeugs mit einer Sicherheitsschraube (38) fixiert wird, wobei der Träger (100) obere in Längsrichtung parallele Röhren (110) aufweist, die an ihrem oberen Teil mittels der entsprechenden Platte (120) verbunden sind, in der Löcher vorhanden sind, und mit dem unteren Teil dieser Röhren verbunden sind, wobei andere betroffene Röhren (180) mit Gleitnuten auf einem Teil ihrer Seiten versehen sind, wobei diese unteren Röhren einen Hebelträger (290) zum Fixieren der Verriegelung eines Vorhängeschlosses enthalten, wobei die oberen und die unteren Röhren Mittel zum Fixieren der "U"-Organe (170) des Vorhängeschlosses bzw. den Träger für seine Verriegelung desselben, und Mittel für die Bewegung der "U"-Organe (170) des Vorhängeschlosses und den Hebelträger (290) der Verriegelung in dieselbe Richtung und in die entgegengesetzte Richtung umfassen, **dadurch gekennzeichnet, dass**
der Träger (100) eine kinematische Kette (310) enthält, die ein Druckstück (191), das mit einigen Hebeln (300) verknüpft ist, umfasst, wobei die kinematische Kette (310) dafür ausgelegt ist, dann, wenn das Verriegelungsorgan (330) mit einer "U"-Form in die Röhre (110) eingeführt wird, das Ende des Verriegelungsorgans (17, 330) mit einer "U"-Form auf das Druckstück (191) zu drücken und die Hebel (300) auf einen Hebelträger (290) zu drücken, der durch eine Nut (280) geht, wobei die Federn (200) und die vorstehenden Ansätze (230) komprimiert werden, und der Benutzer die Verriegelung (320) in die Drehzapfen (270) und die ringförmige Vertiefung (260) positioniert, und dann, wenn die Verriegelung (320) entfernt wird, die kinematische Kette (310) erlaubt, dass der Druck von den Federn (200) die "U"-Organe (330) in Richtung der Außenseite der Röhren (110) drückt.

2. Träger für Verriegelungselemente nach Anspruch 1, wobei der Körper (23) des Trägers einige konkave Oberflächen (23a) umfasst, die durch ebene Oberflächen (23b) verbunden sind.

3. Träger für Verriegelungselemente nach dem vorhergehenden Anspruch, wobei die Oberflächen (23b) des Körpers (23) konvex sind.

4. Träger für Verriegelungselemente nach Anspruch 1, wobei die konkavkonvexen oder eben-konkaven Oberflächen (23) mittels ihrer konkaven Oberflächen oder durch Klemmen an dem Trägereinsatz (10) befestigt sind.

5. Träger für Verriegelungselemente nach Anspruch 1, wobei der Träger einen Körper (33) mit einer prismatischen Konfiguration umfasst, wobei die kleineren Seitenbasen (36) mit Längsnuten (34) versehen sind und sich in der Nähe eines der Enden dieser Nuten (34) einige Rippen (35) befinden, um die Verriegelungsorgane (17) mit einer "U"-Form zu fixieren, und sich auf der Frontbasis (36) eine oder mehrere Drehzapfen (19) befinden.

6. Träger für Verriegelungselemente nach Anspruch 1, wobei die Sicherheitsschraube (38) eine Abdeckung (26) auf einer kleinen Metallplatte (25) umfasst, die die Abdeckung (26) aufgrund eines Bolzens oder einer Niete (27), die sie verbindet, bezüglich der Platte (25) drehen kann, wobei die Abdeckung (26) das Loch (28) verdeckt, durch das eine Schraube (30) hindurchtritt, die die Sicherheitsschraube (38) an dem Einsatz (10) und an jedem Punkt des Fahrzeugs festmacht, wenn die Stange (31) durch die gewinkelte Fläche hindurchtritt und sich durch Deformation in die Abdeckung (26) einpasst, wobei ein Ende der Stange (31) in dem nicht durchgehenden Loch (32) aufgenommen wird.

7. Träger für Verriegelungselemente nach Anspruch 1, wobei der Träger umfasst:
- obere in Längsrichtung parallele Röhren (110), die durch eine oder mehrere Querträgerplatten (120) verbunden sind, wobei die Innenseite der Röhren (110) Federn (140) aufweisen,
- in dem unteren Teil der Röhren (110) andere Röhren (180), die mit den ersten Röhren (110) verbunden sind, wobei die Röhren (180) an einem ihrer Enden eine Mündung (170) aufweisen, durch die ein Träger (290) für die Fixierung eines Verriegelungseinsatzes eines Vorhängeschlosses eingeführt wird, wobei der Träger (290) Ansätze (230) aufweist, die durch eine senkrechte Platte (250) verbunden sind, von deren unterem Teil eine doppelt gewinkelte Fläche (240) hervortritt, wobei der Träger (290) dank einer elliptischen Nut (280) durch ihre Mündungen (220) in die Röhren (180) eingeführt wird, und
- einige Stopfen (190) und (150), die in einem der Enden der Röhren (180) und in den Enden (160) der Röhren (110) vorgesehen sind.

8. Träger für Verriegelungselemente nach dem vorhergehenden Anspruch 7, wobei die Ansätze (230) des Trägers für die Verriegelung des Vorhängeschlosses ringförmige Vertiefungen (260) auf ihrer seitlichen Oberfläche aufweisen.

9. Träger für Verriegelungselemente nach dem vorhergehenden Anspruch 7, wobei die Mittel zum Fixieren der Organe des Vorhängeschlosses mit einer "U"-Form einige Federn (140) umfassen, wovon jeweils ein Ende durch einen Stopfen (150) in einem der Enden der oberen Röhren (110) fixiert ist.

10. Träger für Verriegelungselemente nach Anspruch 7, wobei die Mittel zum Fixieren des Verriegelungsorgans des Vorhängeschlosses und sein Träger einige Federn (200) sind, deren Ende durch einen Stopfen (190) in einem der Enden der unteren Röhren (180) fixiert ist.

11. Träger für Verriegelungselemente nach Ansprüchen 1 und 7, wobei die Druckstücke dafür ausgelegt sind, zu der rechten und linken der oberen Röhren zu gleiten.

12. Träger für Verriegelungselemente nach Anspruch 1, wobei der Träger (1000) umfasst:
- eine Platte, die einige Löcher (1200) in ihrer Oberfläche aufweist, als einen Körper (1100),
- röhrenförmigen Elemente (1300-1400), die auf der Unterseite (2500) des Körpers (1100) befestigt sind, wobei sich im Inneren der röhrenförmigen Elemente (1300) einige Stäbe mit Ansätzen (1500) an einem ihrer Enden befinden, wobei die Stäbe durch eine Strebe (1600) verbunden sind, und dafür ausgelegt sind, durch die Nut (2100) der röhrenförmigen Elemente (1300) zu laufen,
- eine Platte (1700), die senkrecht mit der Strebe (1600) verbunden ist, die einen Flansch (2000) aufweist, wobei die Platte (1700) an ihren Enden mittels einer Feder (1800) mit einem Aufhänger (1900) verbunden ist.

13. Träger für Verriegelungselemente nach Anspruch 12, wobei der Stab mit den Ansätzen (1500) durch das Verriegelungsorgan mit einer "U"-Form des Vorhängeschlosses in den röhrenförmigen Elementen (1300-1400) mit Hilfe des Verriegelungskastens (2400), der diese Ansätze (1500) verriegelt, fixiert ist.

14. Träger für Verriegelungselemente nach Anspruch 12, wobei die Stäbe und Ansätze (1500) dafür ausgelegt sind, sich durch die Handlung des Benutzers auf den Flansch (2000), der die Stäbe-Ansätze (1500) gegen die Kraft der Feder (1800) zieht, zu bewegen.

15. Träger für Verriegelungselemente nach Anspruch 12, **dadurch gekennzeichnet, dass** der Träger für Verriegelungselemente (1000) einige Mittel, um den Benutzer zu warnen, wie beispielsweise einen Kontaktunterbrechersensor (2200) oder ähnliches, und seinen Stab (2300), der an dem Körper (1100) des Trägers (1000) befestigt ist, und einige röhrenförmige Elemente (1300-1400) in dem oberen oder dem unteren Teil des Körpers (1100) des Trägers (1000) aufweist.

## Revendications

1. Support destiné à verrouiller des éléments de véhicules à deux roues ou plus, qui peut être installé sur le châssis ou la carrosserie du véhicule, où les éléments de verrouillage sont constitués par un cadenas avec un élément de verrouillage présentant une forme en « U », et un support de verrouillage avec une clé, où le support comprend :
- un ou plusieurs corps (23) fixés sur un plateau porteur (10), où est fixé au moins un élément de verrouillage présentant une forme en « U » (17, 330), l'un au moins des éléments de verrouillage présentant une forme en « U » (17, 330) reposant sur un ou plusieurs corps (23), ou, lorsque l'élément de verrouillage présentant une forme en « U » (17) est fixé sur ces corps (23) par leurs extrémités et logé dans des passages tubulaires (24), les corps (23) sont placés à droite et à gauche du plateau porteur (10), où un ou plusieurs corps (23) sont joints par les passages tubulaires (24) où est inséré l'élément de verrouillage présentant une forme en « U » (17, 330), les passages tubulaires (24) présentent des ressorts sur leurs extrémités, et
- une plaque (18) avec des pivots faisant saillie (19), où l'élément de verrouillage présentant une forme en « U » (17, 330) comprend des supports de verrouillage (20) dotés de clés (21), et qui y sont immobilisés,
le support est immobilisé avec le plateau porteur (10) sur le châssis ou le bâti du véhicule avec une vis de sécurité (38), où le support (100) présente des tubes parallèles longitudinaux supérieurs (110) joints à l'aide de la plaque correspondante (120) par sa partie supérieure, où il y a des trous, et joints à la partie inférieure de ces tubes, il y a d'autres tubes (180) dotés de rainures de glissière sur une partie de leurs côtés, ces tubes inférieurs contenant un support de levier (290) destiné à immobiliser le verrou d'un cadenas, les tubes supérieurs et inférieurs comprenant des moyens destinés à immobiliser les éléments en forme de « U » (170) du cadenas et le support du verrou de celui-ci respectivement, et des moyens de déplacement des éléments en forme de « U » (170) du cadenas et du support de levier (290) du verrou dans la même direction et dans une direction opposée,
**caractérisé en ce que**
le support (100) comprend une chaîne cinématique (310) comprenant un plongeur (191) relié à des leviers (300), ladite chaîne cinématique (310) étant adaptée de façon à ce que, lorsque l'élément de verrouillage présentant une forme en « U » (330) est inséré dans le tube (110), l'extrémité de l'élément de verrouillage présentant une forme en « U » (17, 330) pousse le plongeur (191), et les leviers (300) poussent un support de levier (290) qui passe à travers une rainure (280) en comprimant les ressorts (200), et des oreilles (230) faisant saillie, et l'utilisateur place le verrou (320) dans les pivots (270) et le renfoncement annulaire (260), et lorsque le verrou (320) est retiré, la chaîne cinématique (310) permet à la pression des ressorts (200) de pousser l'élément en forme de « U » (330) vers l'extérieur des tubes (110).

2. Support destiné à verrouiller des éléments selon la revendication 1, où le corps (23) du support comprend certaines surfaces concaves (23a) jointes par des surfaces planes (23b).

3. Support destiné à verrouiller des éléments selon la revendication précédente, où les surfaces (23b) du corps (23) sont convexes.

4. Support destiné à verrouiller des éléments selon la revendication 1, où les surfaces concaves - convexes ou plates - concaves (23), sont fixées sur le plateau porteur (10) au moyen de leurs surfaces concaves ou par des dispositifs de serrage.

5. Support destiné à verrouiller des éléments selon la revendication 1, où le support comprend un corps (33) avec une configuration prismatique, les petites bases latérales (36) présentant des rainures longitudinales (34), et à proximité de l'une des extrémités de ces cannelures (34) il y a certaines nervures (35) destinées à immobiliser les éléments de verrouillage (17) présentant une forme en « U », et un ou plusieurs pivots (19) sur la base avant (36).

6. Support destiné à verrouiller des éléments selon la revendication 1, où la vis de sécurité (38) comprend un couvercle (26) sur une petite plaque métallique (25), qui peut faire tourner le couvercle (26) par rapport à la plaque (25) grâce à un boulon ou à un rivet (27) qui les relie, ledit couvercle (26) masquant le trou (28), à travers lequel passe une vis (30), qui fixe la vis de sécurité (38) sur le plateau (10) et à n'importe quel point du véhicule, lorsque la tige (31) passe à travers la zone anguleuse, et s'ajuste par déformation dans le couvercle (26), une extrémité de ladite tige (31) étant logée dans un trou non traversant (32).

7. Support destiné à verrouiller des éléments selon la revendication 1, où le support comprend :
- des tubes parallèles longitudinaux supérieurs (110), joints par une ou plusieurs plaques de traverse (120), l'intérieur des tubes (110) présentant un ressort (140),
- dans la partie inférieure des tubes (110), d'autres tubes (180) sont joints aux premiers tubes (110), les tubes (180) présentent sur l'une de leurs extrémités une bouche (170), grâce à quoi un support (290) destiné à l'immobilisation du support de verrou d'un cadenas est inséré, le support (290) présentant des oreilles (230) jointes par une plaque perpendiculaire (250), de la partie inférieure de laquelle émerge une zone doublement anguleuse (240), ledit support (290) étant inséré dans les tubes (180) par leurs bouches (220) grâce à une rainure elliptique (280), et
- des bouchons (190) et (150) sont prévus dans l'une des extrémités des tubes (180), et dans les extrémités (160) des tubes (110).

8. Support destiné à verrouiller des éléments selon la revendication 7, où les oreilles (230) du support du verrou du cadenas présentent des renfoncements annulaires (260) sur leur surface latérale.

9. Support destiné à verrouiller des éléments selon la revendication précédente 7, où les moyens destinés à immobiliser l'élément du cadenas présentant la forme en « U », comprennent des ressorts (140), dont une extrémité est immobilisée par un bouchon (150) dans l'une des extrémités des tubes supérieurs (110).

10. Support destiné à verrouiller des éléments selon la revendication 7, où les moyens destinés à immobiliser l'élément de verrouillage du cadenas et son support, sont des ressorts (200), dont l'extrémité est immobilisée par un bouchon (190) dans l'une des extrémités des tubes inférieurs (180).

11. Support destiné à verrouiller des éléments selon l'une quelconque des revendications 1 et 7, où le plongeur est adapté à des glissières à droite et à gauche des tubes supérieurs.

12. Support destiné à verrouiller des éléments selon la revendication 1, où le support (1000) comprend :
- une plaque en tant que corps (1100) avec des trous (1200) dans sa surface,
- dans la face inférieure (2500) du corps (1100), sont fixés les éléments tubulaires (1300-1400), où, à l'intérieur des éléments tubulaires (1300), il y a des tiges avec des oreilles (1500) dans l'une de leurs extrémités, lesdites tiges sont jointes par un renfort (1600), et sont adaptées pour passer par la rainure (2100) des éléments tubulaires (1300),
- une plaque (1700) reliée perpendiculairement au renfort (1600) présente une bride (2000), ladite plaque (1700) étant jointe par son extrémité à une languette (1900) à l'aide d'un ressort (1800).

13. Support destiné à verrouiller des éléments selon la revendication 12, où la tige avec les oreilles (1500) est immobilisée avec l'élément de verrou présentant une forme en « U » du cadenas dans les éléments tubulaires (1300-1400), à l'aide du boîtier de verrou (2400) qui se verrouille sur ces oreilles (1500).

14. Support destiné à verrouiller des éléments selon la revendication 12, où les tiges et les oreilles (1500) sont adaptées à un déplacement par l'action de l'utilisateur sur la bride (2000) en tirant les tiges - oreilles (1500) en s'opposant à la force du ressort (1800).

15. Support destiné à verrouiller des éléments selon la revendication 12, **caractérisé en ce que** le support destiné à verrouiller des éléments (1000) présente des moyens visant à avertir l'utilisateur, tel qu'un capteur de rupture de contact (2200) ou similaire et sa tige (2300), fixés sur le corps (1100) dudit support (1000), et des éléments tubulaires (1300-1400) dans la partie supérieure ou inférieure du corps (1100) du support (1000).
